# EUROPÄISCHE PATENTANMELDUNG

(11) **EP 4 534 422 A1**
(43) Veröffentlichungstag der Anmeldung: **09.04.2025**
(21) Anmeldenummer: 24193616.0
(22) Anmeldetag: 08.08.2024
(51) Int. Cl.: B65B 1/28, B65G 69/18, B65B 39/00, B65B 69/00, B65B 31/00

(54) **HALTERUNGS-ANORDNUNG FÜR UMFÜLLVORRICHTUNG**

(30) Priorität: 22.08.2023 CH 8852023
(71) Anmelder: Rubitec AG, 4431 Bennwil (CH)
(72) Erfinder: RUBITSCHUNG, Christoph, 4432 Lampenberg (CH)
(74) Vertreter: Troesch Scheidegger Werner AG

(57) **Zusammenfassung**

Halterungs-Anordnung 10 zum dichtenden Haltern eines Folienschlauchs 20, wobei die Halterungs-Anordnung ein erstes Rohrelement 11 umfasst, an welches durch einen ringförmigen Spalt 13 vom ersten Rohrelement getrennt ein zweites Rohrelement 12 anschliesst, wobei das erste und das zweite Rohrelement gemeinsam einen Innenraum 14 umgeben, wobei ein erstes Spannelement 15 radial aussen um das erste Rohrelement herum verläuft, wobei das erste Rohrelement, das zweite Rohrelement und das erste Spannelement derart ausgebildet sind, dass der Folienschlauch aus dem Innenraum durch den ringförmigen Spalt hindurch auf eine Aussenseite des ersten Rohrelements geführt werden kann, dass der Folienschlauch entlang einer ersten Umfangslinie 20' des Folienschlauchs durch das erste Spannelement gegen eine erste Anpressfläche des ersten Rohrelement dichtend fixiert werden kann und dass der Folienschlauch entlang einer zweiten Umfangslinie 20'' des Folienschlauchs im ringförmigen Spalt dichtend fixiert werden kann, wobei in einem Bereich 17 zwischen dem ringförmigen Spalt und der Anpressfläche ein Gasauslass 18 aus der Aussenfläche des ersten Rohrelements mündet, und wobei der Gasauslass in direkter fluiddynamischer Verbindung 19 mit einem äusseren Rand 13' des ringförmigen Spalts steht. Weiter ist die Erfindung auf eine Umfüllvorrichtung mit der Halterungs-Anordnung, auf eine Verwendung und auf Verfahren mit der Halterungs-Anordnung gerichtet.

## Beschreibung

Die vorliegende Erfindung betrifft eine Halterungs-Anordnung zum Haltern eines Folienschlauchs, insbesondere eine Halterungs-Anordnung für eine Umfüllvorrichtung, insbesondere für eine Umfüllvorrichtung zum kontaminationsarmen Umfüllen von Prozessmaterial.

Im technischen Gebiet des kontaminationsarmen Umfüllens von Prozessmaterial ist es bekannt, beim Andocken eines Behältnisses an eine Umfüllvorrichtung resp. beim Abdocken des Behältnisses von einer Umfüllvorrichtung mittels einer Schlauchfolie, eines sogenannten Liners, eine Trennung zwischen einer kontaminierten Innenseite der Umfüllvorrichtung resp. der Innenseite des Behältnisses und einer vor Kontamination mit dem Prozessmaterial zu schützenden Umgebung zu erreichen. Ebenso kann ein Prozessmaterial, das sich auf der Innenseite befindet, vor Kontamination mit einer Substanz aus der Umgebung geschützt werden.

Eine Vorrichtung und ein Verfahren für ein kontaminationsgeschütztes Überleiten von Prozessmaterial zwischen einem ersten und einem zweiten Behältnis ist aus der Veröffentlichungsschrift EP 3718911 A1 bekannt. In diesem Verfahren werden schlauchförmige Nutzabschnitte des Liners durch mehrere Spannelemente, die unabhängig voneinander betätigt werden können, entlang von Umfangslinien des Liners eingeklemmt und wieder losgelassen. Dabei erfolgt das Klemmen und Öffnen der Spannelemente und das Einlegen der Linerabschnitte in diese Spannelemente in einer solchen Weise und in einer solchen Abfolge, dass eine im Wesentlichen dichte Trennung zwischen Innenseite und Umgebung über Umfüllvorgänge und über Austauschvorgänge von Schlauchfolien hinweg dauernd aufrechterhalten bleibt. Bei der Handhabung des Folienschlauchs ergeben sich immer wieder Situationen, in welchen ein Austritt beispielsweise von feinstem Staub des Prozessmaterials nicht gänzlich ausgeschlossen werden kann. Verbesserungen in Richtung weitere Minimierung von Kontamination sind wünschenswert.

Die Aufgabe der vorliegenden Erfindung bestand darin, eine Vorrichtung zur Verfügung zu stellen, welches die Sicherheit bezüglich versehentlicher Kontamination beim Umfüllen von Prozessmaterial weiter erhöht.

Diese Aufgabe wird auf überraschende einfache Art durch eine Halterungs-Anordnung gemäss Anspruch 1 gelöst. Ausführungsformen der Halterungs-Anordnung ergeben sich aus den Merkmalen der abhängigen Ansprüche 2 bis 4.

Die erfindungsgemässe Halterungs-Anordnung geeignet zum dichtenden Haltern eines Folienschlauchs. Die Halterungs-Anordnung umfasst ein erstes Rohrelement, an welches durch einen ringförmigen Spalt vom ersten Rohrelement getrennt ein zweites Rohrelement anschliesst. Das erste und das zweite Rohrelement umgeben gemeinsam einen Innenraum. Ein erstes Spannelement verläuft radial aussen um das erste Rohrelement herum. Das erste Rohrelement, das zweite Rohrelement und das erste Spannelement sind derart ausgebildet, dass der Folienschlauch aus dem Innenraum durch den ringförmigen Spalt hindurch auf eine Aussenseite des ersten Rohrelements geführt werden kann, dass der Folienschlauch entlang einer ersten Umfangslinie des Folienschlauchs durch das erste Spannelement gegen eine erste Anpressfläche des ersten Rohrelement dichtend fixiert werden kann und dass der Folienschlauch entlang einer zweiten Umfangslinie des Folienschlauchs im ringförmigen Spalt dichtend fixiert werden kann. In einem Bereich zwischen dem ringförmigen Spalt und der Anpressfläche mündet ein Gasauslass aus der Aussenfläche des ersten Rohrelements. Der Gasauslass steht in direkter fluiddynamischer Verbindung mit einem äusseren Rand des ringförmigen Spalts.

Der Erfinder hat erkannt, dass sich bei Umfüllvorgängen wie oben erwähnt, die Situation ergeben kann, dass bei geklemmtem Zustand des Spannelements ein Abschnitt des Folienschlauchs aus dem ringförmigen Spalt herausgezogen werden muss. Ein grosser Anpressdruck auf den Folienschlauch führt einerseits zu einer guten Dichtheit entlang dem Spalt, behindert aber das Herausziehen des Folienschlauchs aus dem Spalt und kann im Extremfall auch dazu führen, dass der Folienschlauch beim Herausziehen beschädigt wird. Ein niedriger Anpressdruck erleichtert das Herausziehen, kann aber zu Dichtheitsproblemen führen. Mit der erfindungsgemässen Halterungs-Anordnung wird dieses Dilemma gelöst. Der Gasauslass ermöglicht den Aufbau einer Druckdifferenz zwischen Gasauslass und Innenraum. Durch das Anlegen einer Druckdifferenz zwischen Gasauslass und Innenraum entsteht eine Gasströmung durch den Spalt hindurch in den Innenraum hinein, jeweils an denjenigen Stellen, an denen die Abdichtung zwischen Lagen des Folienschlauchs oder zwischen Folienschlauch und erstem respektive zweiten Rohrelement nicht perfekt ist. Durch die nach innen fliessende Gasströmung werden z.B. Staubpartikel des Prozessmaterials nach innen geblasen und ein versehentlicher Austritt in die Umgebung wird verhindert.

Die Halterungs-Anordnung ist auch auf eine schwierigere Situation anwendbar, bei der im ringförmigen Spalt der Halterungsanordnung zwei oder drei Lagen an Liner zu liegen kommen, wobei beispielsweise ein umgestülpter Linerabschnitt in zwei Lagen im Spalt liegt, wie unten im Rahmen von Ausführungsformen der Halterungs-Anordnung und im Rahmen von Verfahrensabläufen, in denen die Halterungsanordnung verwendet wird, noch genauer besprochen wird.

Der ringförmige Spalt kann beispielsweise die Form eines Kreisrings haben. Das erste und das zweite Rohrelement können beispielsweise in einem an den ringförmigen Spalt angrenzenden Abschnitt die Form von Hohlzylindern mit kreisförmigem Querschnitt haben, wobei die Hohlzylinder koaxial zueinander angeordnet sind und wobei das erste und zweite Rohrelement jeweils mit einer Stirnseite des hohlzylindrischen Abschnitts an den ringförmigen Spalt angrenzen. Der ringförmige Spalt kann beispielsweise auch die Form eines Polygons mit abgerundeten Ecken haben, z.B. die Form eines Quadrats oder eines Rechtecks mit abgerundeten Ecken. Die am ringförmigen Spalt aufeinandertreffenden Enden der beiden Rohrelemente haben dann natürlich die korrespondierende Form, sodass ein umlaufender Spalt resultiert.

In einer Ausführungsform der Halterungs-Anordnung ist der Gasauslass mit einem Mittel zur Erzeugung eines Gasvolumenstroms, insbesondere mit einer Druckflasche oder mit einer Pumpe, fluiddynamisch verbunden.

In einer Ausführungsform der Halterungs-Anordnung ist das zweite Rohrelement gegenüber dem ersten Rohrelement in einer axialen Richtung zum Öffnen und Schliessen des ringförmigen Spalts verfahrbar.

Dabei kann der Spalt beispielsweise bis zum Anpressen eines im ringförmigen Spalt liegenden Abschnitts des Folienschlauchs geschlossen werden. Das zweite Rohrelement kann beispielsweise federnd gelagert sein, sodass die Anpresskraft zwischen den Rohrelementen gut kontrolliert werden kann. Das erste und/oder das zweite Rohrelement kann beispielsweise einen Dichtungsring umfassen, welcher an den ringförmigen Spalt zwischen dem ersten und zweiten Rohrelement angrenzt.

In einer Ausführungsform umfasst die Halterungs-Anordnung ein zweites Spannelement, wobei das zweite Spannelement um das erste Rohrelement herum verläuft, und derart angeordnet ist, dass in einem aktivierten Zustand des zweiten Spannelements ein eingefalzter Abschnitt des Folienschlauchs gegen eine zweite Anpressfläche des ersten Rohrelements dichtend fixiert werden kann und dass zumindest in einem nicht-aktivierten Zustand des zweiten Spannelements die direkte fluiddynamische Verbindung zwischen Gasauslass und dem äusserem Rand des ringförmigen Spalts offen ist.

Das zweite Spannelement kann beispielsweise in Form einer Blähdichtung ausgebildet sein. Eine solche Blähdichtung kann von aussen, das heisst ohne Kontakt zu dem umzufüllenden Prozessmaterial aktiviert und deaktiviert werden, indem beispielsweise Pressluft in die Blähdichtung gepresst wird oder aus der Blähdichtung abgelassen wird.

Weiter wird die Aufgabe durch eine Umfüllvorrichtung nach Anspruch 5 gelöst. Eine Ausführungsform der Umfüllvorrichtung ergibt sich aus den Merkmalen des Anspruchs 6.

Die erfindungsgemässe Umfüllvorrichtung dient zum Überleiten von Prozessmaterial, insbesondere von fliessfähigem Prozessmaterial. Die Umfüllvorrichtung umfasst eine erfindungsgemässe Halterungs-Anordnung. Die Umfüllvorrichtung kann beispielsweise Anschlussmittel zum dichtenden Anschliessen eines Behältnisses umfassen, aus welchem Behältnis das umzufüllende Prozessmaterial entnommen werden soll. Die Umfüllvorrichtung kann alternativ auch Bestandteil einer Produktionsanlage sein, in welcher das umzufüllende Prozessmaterial hergestellt oder verarbeitet wird. Die Umfüllvorrichtung kann weitere Element umfassen, welche beispielsweise zur Reinigung der Umfüllvorrichtung dienen.

Eine Ausführungsform der Umfüllvorrichtung umfasst weiter eine Transfereinheit, welche den Eingriff in den Innenraum ermöglicht und welche eine Ausschleusung von kontaminierten Resten von Abschnitten des Folienschlauchs ermöglicht.

Die Erfindung bezieht sich weiter auf ein Verfahren nach Anspruch 7.

Das erfindungsgemässe Verfahren umfasst das Haltern eines einseitig kontaminierten Folienschlauchs im Spalt einer erfindungsgemässen Halterungs-Anordnung und während diesem Haltern ein Erzeugen eines gegenüber dem Innenraum erhöhten Gasdrucks am Gasauslass.

Dieses Verfahren führt zu einer erhöhten Sicherheit gegen versehentliches Austreten von Partikeln des Prozessmaterials, während der Folienschlauch im ringförmigen Spalt gehaltert wird. Der Folienschlauch kann unter Umständen abschnittsweise einlagig und abschnittsweise mehrlagig im Spalt zu liegen kommen. Die Stelle mit den meisten Lagen und die verwendete Anpresskraft bestimmen den Abstand zwischen erstem und zweitem Rohrelement. An Abschnitten mit nur einer Lage an Folienschlauch ist die Dichtheit nicht optimal. So können entlang des Umfangs des Spalts Abschnitte mit geringerer Dichtheit und Abschnitte mit erhöhter Dichtheit entstehen. Durch den gegenüber dem Innenraum erhöhten Gasdruck auf der Aussenseite entsteht an den Stellen mit geringerer Dichtheit eine Strömung von aussen nach innen und verhindert den Austritt von Partikeln.

Die Erfindung bezieht sich noch weiter auf ein Verfahren nach Anspruch 8.

Das Verfahren dient dem Austauschen eines in einer Ausführungsform der Halterungs-Anordnung gehalterten, einseitig kontaminierten Folienschlauchs durch einen neuen, unkontaminierten Folienschlauch. Dieses Verfahren bezieht sich auf eine Ausführungsform der Halterungs-Anordnung mit erstem und mit zweitem Spannelement. Dabei umfasst das Verfahren die Schritte:
- Abgedichtetes Fixieren eines umgefalzten, ringförmigen Bereichs des einseitig kontaminierten Folienschlauchs im zweiten Spannelement, wobei der Folienschlauch eine Sackform bildend an einem Ende mit einer Abcrimpung oder Abbindung verschlossen ist;
- Einführen eines ersten Endes des unkontaminierten Folienschlauchs vom Innenraum her, durch den Spalt hindurch ins geöffnete erste Spannelement und Schliessen des ersten Spannelements zum dichtenden Fixieren des unkontaminierten Folienschlauchs entlang einer ersten Umfangslinie des Folienschlauchs gegen eine erste Anpressfläche des ersten Rohrelements;
- Heranfahren des zweiten Rohrelements bis zu einer Klemmposition an das erste Rohrelement heran, wobei zwei Lagen des kontaminierten Folienschlauchs und eine Lage des unkontaminierten Folienschlauchs im Spalt gehaltert werden;
- Lösen des zweiten Spannelements und Herausziehen des kontaminierten Folienschlauchs in Richtung Innenraum, während ein gegenüber dem Innenraum erhöhter Gasdruck am Gasauslass erzeugt wird.

Damit entsteht während der kritischen Phasen des Herausziehens des Folienschlauchs aus dem Spalt eine von aussen nach innen strömender Gasfluss, wo immer eine nicht ganz perfekt dichtende Stelle zwischen Aussenraum und Innenraum auftritt. Dieser Gasfluss treibt Partikel des Prozessmaterials von aussen nach innen und verhindert ein versehentliches Austreten in die Umgebung. Dies erlaubt, während der Phase des Herausziehens des Folienschlauchs aus dem Spalt den Anpressdruck zwischen erstem und zweiten Rohrelement zu Reduzieren im Vergleich zum Anpressdruck, welcher zur Halterung des Folienschlauchs im Spalt angewendet wird.

Die beiden oben genannten Verfahren können ohne weiteres kombiniert werden, wobei lange Sequenzen von abwechselndem Haltern und Austauschen des Folienschlauchs realisierbar sind.

Weiter ist die Erfindung auf ein Verfahren nach Anspruch 9 gerichtet. Es handelt sich dabei um ein Verfahren zum Umfüllen von Prozessmaterial, welches alternativ oder in Kombination die Schritte der oben genannten Verfahren umfasst. Prozessmaterial wird von einem ersten Behältnis durch den Innenraum hindurch in ein zweites Behältnis umgefüllt, während der Folienschlauch im Spalt abgedichtet gehaltert wird.

Das Anlegen des erhöhten Gasdrucks erfolgt dabei während des Umfüllens und/oder während des Austauschens des Folienschlauchs zwischen Umfüllvorgängen. Wie oben besprochen wird in beiden Phasen das Risiko für ein versehentliches Entweichen von Prozessmaterial vermindert.

Die Erfindung bezieht sich noch weiter auf eine Verwendung nach Anspruch 10. Es handelt sich dabei um die Verwendung der erfindungsgemässen Halterungs-Anordnung zum Haltern eines Folienschlauchs beim kontaminationsarmen Umfüllen von Prozessmaterial.

Ausführungsbeispiele der vorliegenden Erfindung werden nachstehend anhand von Figuren noch näher erläutert. Es zeigen
Fig. 1 eine Halterungs-Anordnung in schematischer Schnittdarstellung;
Fig. 2 die Halterungs-Anordnung aus Fig. 1 in einer konkreten Situation im Einsatz
Fig. 3 in Teilfiguren 3.a) bis 3.e) eine Ausführungsform der Umfüllvorrichtung in verschiedenen Phasen einer Variante des Verfahrens, als schematische Querschnittszeichnung;
Fig. 4 ein Detail aus der Umfüllvorrichtung in der Phase gemäss Fig. 3.d);
Fig. 5 eine beispielhafte Ausgestaltung des zweiten Spannelements als Querschnittszeichnung; und
Fig. 6 eine Unteransicht des Spannelements der Fig. 5.

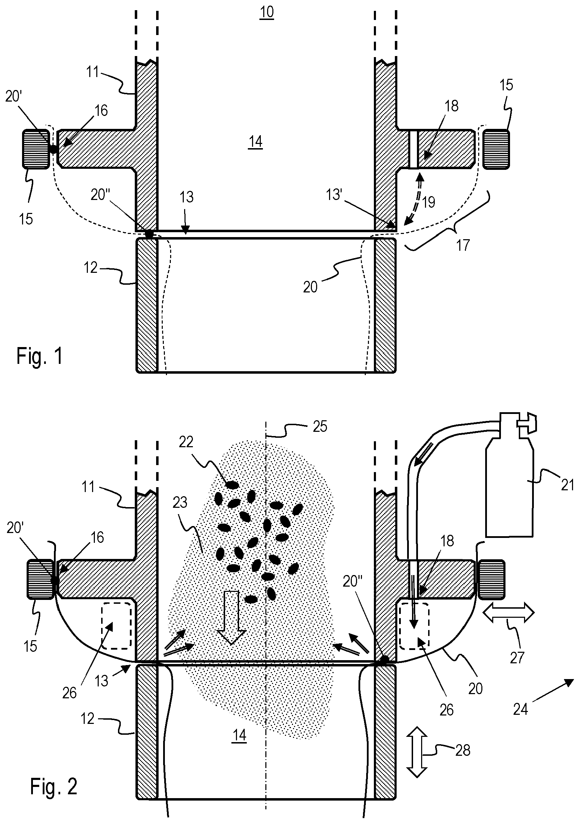

In Figur 1 ist in Schnittdarstellung und schematisch eine erfindungsgemässe Halterungs-Anordnung gezeigt. Die Halterungs-Anordnung 10 umfasst ein erstes Rohrelement 11, an welches durch einen ringförmigen Spalt 13 vom ersten Rohrelement getrennt ein zweites Rohrelement 12 anschliesst. Das erste 11 und das zweite 12 Rohrelement umgeben einen Innenraum 14. Ein erstes Spannelement 15 verläuft radial aussen um das erste Rohrelement herum.

Ein das erste Rohrelement umlaufender leerer Raumbereich grenzt an das erste Rohrelement an. Dieser Raumbereich ist unversperrt und erlaubt eine fluiddynamische Verbindung zwischen einem Rand 13' des Spalts 13 und dem Gasauslass 18, welcher in einen Bereich 17 einmündet. Die fluiddynamische Verbindung ist mit einem Doppelpfeil mit gestrichelter Doppellinie symbolisiert. Es handelt sich um eine direkte Fluiddynamische Verbindung, das heisst, dass das Gas, welches aus dem Gausauslass 18 austritt, zum Rand 13 des Spalts 13' strömen kann.

Das erste Rohrelement, das zweite Rohrelement und das erste Spannelement sind derart ausgebildet, dass in der gestrichelt dargestellten Lage ein Folienschlauch 20 in der gezeigten Art gehalten werden kann. Dazu kann der Folienschlauch aus dem Innenraum durch den ringförmigen Spalt hindurch auf eine Aussenseite des ersten Rohrelements geführt werden, der Folienschlauch kann entlang einer ersten Umfangslinie 20' des Folienschlauchs durch das erste Spannelement dichtend fixiert werden und der Folienschlauch kann entlang einer zweiten Umfangslinie 20'' des Folienschlauchs im ringförmigen Spalt dichtend fixiert werden. In dieser Schnittzeichnung erscheinen die beiden Umfangslinien als Punkte.

In Figur 2 ist die Halterungs-Anordnung aus Figur 1 in einem konkreten Anwendungsfall dargestellt. Prozessmaterial 22, hier in Form von Pellets wird in Pfeilrichtung von oben nach unten umgefüllt. Dabei entstehender feiner Staub 23 soll nicht in die Umgebung 24 austreten. Ein Folienschlauch 20 wird im Spalt 13 und durch das erste Spannelement 15 dichtend gehaltert. In der mit horizontalem Doppelpfeil symbolisierten Bewegungsrichtung 27 des ersten Spannelements 15 wird der Folienschlauch gegen die erste Anpressfläche 16 des ersten Rohrelements gepresst. In der axial verlaufenden Bewegungsrichtung 28 des zweiten Rohrelements ist das zweite Rohrelement bis zum weitgehenden Schliessen des Spalts 13 an das erste Rohrelement herangefahren. In der gezeigten Ausführungsform sind das erste und zweite Rohrelement rotationssymmetrisch bezüglich der gemeinsamen Achse 25. Der Raumbereich 26 ist nun durch den Folienschlauch 20 von der Umgebung 24 der Halterungs-Anordnung abgetrennt.

Mittel 21 zur Erzeugung eines gegenüber dem Innenraum erhöhten Gasdrucks im genannten Raumbereich 26 sind hier beispielhaft durch eine Druckgasflasche realisiert. Gas strömt aus der Druckgasflasche durch den Gasauslass 18 in den Raumbereich 26, welcher ringförmig um das erste Rohrelement herum verläuft. Wo sich entlang dem Spalt 13 ein kleiner Spalt öffnet, strömt aufgrund des Überdrucks gegenüber dem Inneraum 14 unmittelbar Gas von aussen nach innen, wie durch die Pfeile mit Doppelinie symbolisiert. Ein Austreten auch von feinsten Partikeln des Prozessmaterials in die Umgebung wird so stark reduziert, selbst für den Fall eines nicht perfekten dichten Spalts zwischen Folienschlauch 20 und dem ersten Rohrelement. Wie durch gestrichelte Linien angedeutet, kann das erste Rohrelement sich nach oben hin weiter erstrecken und beispielsweise ein Element einer komplexeren Umfüllvorrichtung sein.

In einem Ausführungsbeispiel kann der Innenraum ein mit einem mit Filter versehen Gasauslass zur Umgebung hin aufweisen. In diesem Ausführungsbeispiel kann eine Druckdifferenz zwischen dem Druck am Gaseinlass und dem Innenraum auf einfache Art aufrechterhalten werden, selbst wenn fortwährend Gas durch den Spalt 13 von aussen nach innen fliesst.

Mit Bezug auf die Teilfiguren 3.a) bis 3.e) erfolgt nachstehend die detaillierte Beschreibung eines Ausführungsbeispiels zum konstruktiven Aufbau einer Ausführungsform der erfindungsgemässen Umfüllvorrichtung und deren Verwendung im Rahmen einer Variante des erfindungsgemässen Verfahrens zum Umfüllen eines Prozessmaterials in Kombination mit einer Variante des Verfahrens zum Austauschen des kontaminierten Folienschlauchs durch einen neuen Folienschlauch im Anschluss an das Umfüllen. Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit kann auf die wiederholte Bezeichnung von Bau-teilen in nachfolgenden Figuren manchmal verzichtet werden, sofern zeichnerisch eindeutig erkennbar ist, dass es sich um "wiederkehrende" Bauteile handelt.

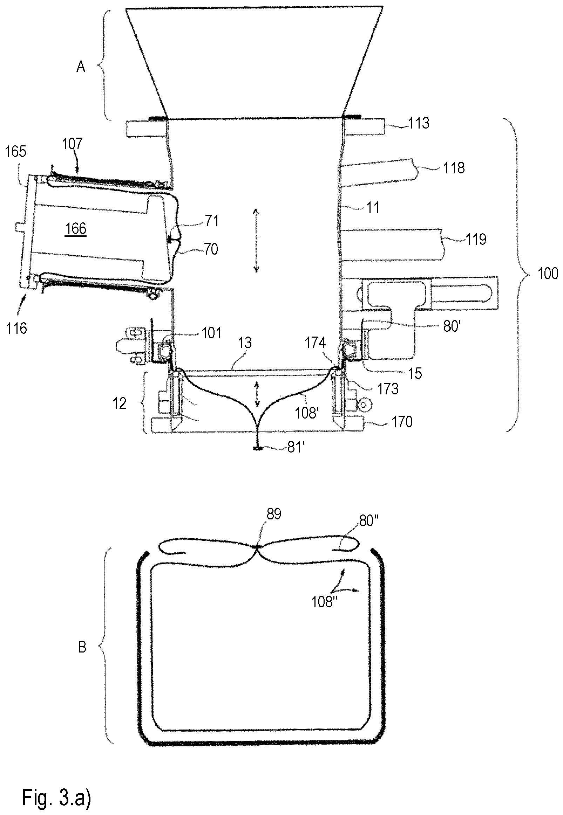

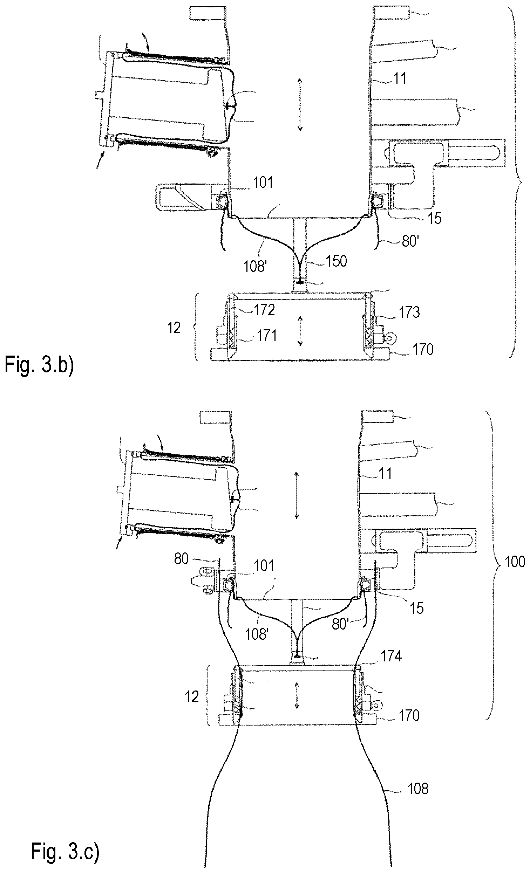

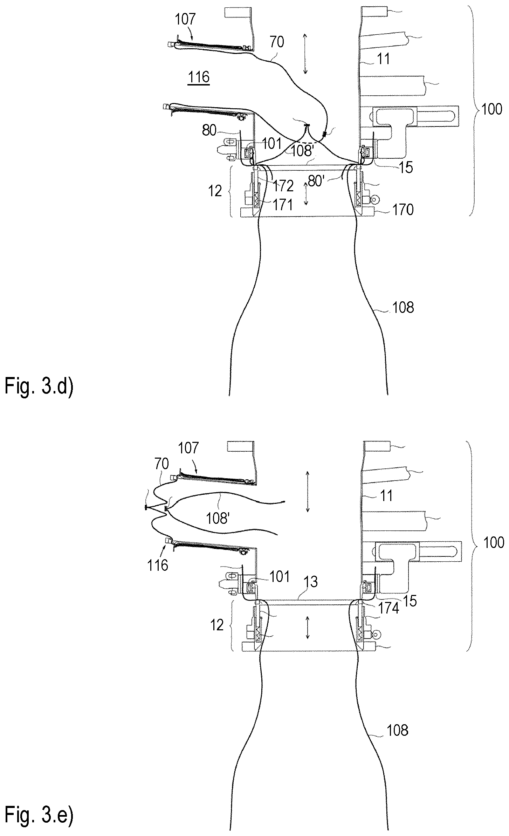

### Figur 3.a) : Vorrichtungsaufbau Erste Phase - Schluss eines Umfüllvorgangs

Das hier gezeigte Ausführungsbeispiel geht davon aus, dass aus dem ersten Behältnis A ein Prozessmaterial, in Form fliessfähiger Feststoffe, in ein zweites Behältnis B mittels der Umfüllvorrichtung 100 kontaminationsgeschützt eingebracht wird. Das erste Behältnis A ist direkt abgedichtet an ein Anschlussmittel 113 des ersten Rohrelements 11 der Umfüllvorrichtung 100 angeschlossen. Das erste Rohrelement hat die Funktion einer Leitröhre. Das erste Behältnis A ist z.B. ein Container oder ein Bestandteil einer Produktionsanlage. Das zweite Behältnis B hat z.B. die Gestalt eines Bigbags oder eines Containers, welcher ein Linerstück 108'' als sackförmigen Innenliner enthält, dessen freies Ende 80'' vor dem Start eines Umfüllvorgangs üblicherweise mit einem Verschluss 89 versehen ist. Die Förderrichtung könnte alternativ vom zweites Behältnis B zum ersten Behältnis A verlaufen. Der sich durch die Leitröhre 11 erstreckende Axialdurchgang (mögliche Förderrichtungen im Axialdurchgang sind als Doppelpfeil dargestellt) erlaubt den Durchfluss des Prozessmaterials. Am Austrittsende schliesst das erste Rohrelement 11 mit einem Röhrenrand ab. Zum ersten Rohrelement 11 in Form einer Leitröhre führen eine Inertgasleitung 118, zur Beschickung mit Inertgas, falls es das spezielle Prozessmaterial erfordert, sowie eine Waschmittelleitung 119 zur Reinigung der Vorrichtung 100. In das erste Rohrelement 11 mündet in der gezeigten Ausführungsform eine Transfereinheit 116 ein, welche den Eingriff in das Rohrelement erlaubt und auf der von einem schlauchförmigen Linervorrat 107 eine Vielzahl von jeweils mit einer ersten Abcrimpung 71 versehener abziehbarer Nutzabschnitte 70 gespeichert ist. Der aktuelle Nutzabschnitt 70 liegt bis zu seiner Verwendung in der Transfereinheit 116 und mit seiner ersten Abcrimpung 71 hin zur Mündung und ist von einem Stopfen 166 an die Mündung heran vorgeschoben, der sich von aussen in die Transfereinheit 116 einführen lässt. Der Stopfen 166 ist aus der Transfereinheit 116 herausziehbar und mit einem vorsetzbaren Deckel 165 verbunden. Die Transfereinheit 116 ist in der Form eines von dem ersten Rohrelement 11 abgehenden Seitenstutzens ausgebildet und mündet mit Gefälle mit einer Durchgangsöffnung in die Wandung des ersten Rohrelements 11.

Ein Linerrest 108' von einem vorangegangenen Umfüllvorgang ist gemäss der gezeigten Ausführungsform in diesem Zustand in drei Bereichen dichtend gehaltert, nämlich im ringförmigen Spalt 13 zwischen erstem 11 und zweitem 12 Rohrelement, im ersten Spannelement 15 und im zweiten Spannelement 101. Erstes und zweites Spannelement verlaufen ringförmig um das erste Rohrelement herum. Sie werden in der Querschnittszeichnung Fig. 3.a) je an zwei Stellen geschnitten.

Das zweite Spannelement 101, hier in Gestalt einer momentan aktivierten Blähdichtung, fixiert das eingefalzte Restende 80' des Linerrests 108' in abgedichteter Weise. Vom zweiten Spannelement 101 erstreckt sich das Restende 80' zum ersten Spannelement 15 und ist auch dort gegenwärtig ebenfalls fest abgedichtet eingespannt. Das erste Spannelement ist z.B. als eine in geschlossenem Zustand verengte und im offenen Zustand aufgeweitete Klammer beschaffen, die einen manuell betätigbaren Verschluss hat.

Der Linerrest 108' unterläuft den Röhrenrand des ersten Rohrelements 11, durchquert dabei den ringförmigen Spalt 13 und hängt, zuunterst mit der verschliessenden zweiten Abcrimpung 81' versehen, sackförmig in den Axialdurchgang des zweiten Rohrelements 12, welches die Funktion einer Anpresseinheit hat. Mit einem Hubgestänge 150 ist ein Basisteil 170 der Anpresseinheit fest verbunden (siehe Figur 3.b), auf dem sich mittels einer einstellbaren Federung 171 ein Pressteil 172 elastisch abstützt. Das zweite Rohrelement 12 besitzt ferner ein aktivierbares Stopfelement 173, welches dazu dient, das freie Ende 80 eines neuen Linerstücks 108 in das zweite Spannelement 101 einzufalzen. In der gegenwärtigen Phase ist das Stopfelement 173 in zurückgezogener Position, wirkt also nicht in das zweite Spannelement hinein. Ist, wie hier gezeigt, das Basisteil 170 maximal an die das erste Rohrelement 11 herangefahren, so wird der Linerrest 108' von der auf dem Pressteil 172 angeordneten Dichtung 174 gegen den Röhrenrand des ersten Rohrelements fest dichtend angepresst. Die Federung 171 ist zusammengedrückt und so wirkt zusätzlich die über das Hubgestänge ausgeübte Druckkraft auf die Dichtung 174.

### Figur 3.b) : Zweite Phase

Das zweite Spannelement 101 bleibt aktiviert, und das zweite Rohrelement (d.h. die Anpresseinheit) ist vom ersten Rohrelement 11 (d.h. von der Leitröhre) weggefahren. Dabei hat sich die Federung 171 maximal entspannt, so schiebt sich der Pressring 172 aus dem Basisteil 170. Das erste Spannelement 15 ist nun gelöst. Damit lässt sich das dort zuvor eingespannte Restende 80' des Linerrestes 108' herausziehen und hängt nun frei herunter.

### Figur 3.c) : Dritte Phase

Bei weiterhin aktiviertem zweitem Spannelement 101 und in beibehaltener beabstandeter Position des zweiten Rohrelements, ist ein neues Linerstück 108 durch das zweite Rohrelement 12 hindurch (d.h. durch die Anpresseinheit hindurch) in das zuvor noch offenen erste Spannelement 15 eingeführt worden. Danach wurde das erste Spannelement 15 geschlossen. Im gezeigten Zustand ist das neue Linerstück im geschlossenen ersten Spannelement dichtend gehaltert.

### Figur 3.d) : Vierte Phase

Das Restende 80' und das neue Linerstück 108 sind um den Röhrenrand geführt. Das Basisteil 170 des zweiten Rohrelements ist bis zu einer Klemmposition an das erste Rohrelement 11 herangefahren, so drückt die auf dem Pressteil 172 angeordnete Dichtung 174 das Restende 80' und das neue Linerstück 108 somit jetzt durch die Kraft der Federung 171 nur mässig gegen den Röhrenrand. Nun kann das zweite Spannelement 101 gelöst werden, während das erste Spannelement 15 fest geschlossen bleibt. Von der Transfereinheit 116 sind der Deckel 165 zusammen mit dem Stopfen 166 entfernt. Mittels des aktuellen vom Linervorrat 107 in die Leitröhre, d.h. in das erste Rohrelement 11, vorgeschobenen Nutzabschnitts 70 wird der Linerrest 108' ergriffen.

### Figur 3.e) : Fünfte Phase

Bei beibehaltener Position des zweiten Rohrelements 12, welches die Funktion einer Anpresseinheit hat, wird mit weiterhin nur mässigem Anpressdruck der Dichtung 174 auf die Klemmstelle gegen den Röhrenrand mittels des Nutzabschnitts 70 der ergriffene Linerrest 108' samt der zweiten Abcrimpung 81' aus dem gelösten zweiten Spannelement 101 und aus der Klemmstelle, welche durch den ringförmigen Spalt 13 gebildet wird, herausgezogen und in die Transfereinheit 116 hineingezogen. Damit beginnt der Nutzabschnitt 70 mit der daran vorhandenen ersten Abcrimpung 71 aus der Transfereinheit 116 herauszukommen. Der erste Spannelement 15 bleibt geschlossen, so dass das eingespannte Ende 80 des neuen Linerstücks 108 fest abgedichtet bleibt und keinesfalls mit herausgezogen wird.

Anschliessend können die Verfahrensschritte durchgeführt werden, wie sie in der Veröffentlichungsschrift EP 3718911 A1 als sechste bis zehnte Phase beschrieben sind, wobei mit der zehnten Phase ein neuer Umfüllvorgang wie oben beschrieben beginnt.

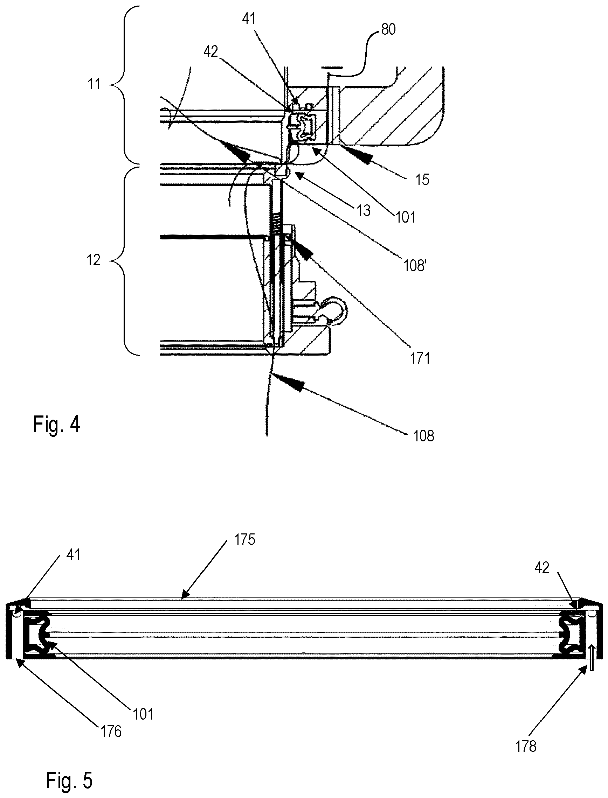

In Figur 4 ist als Schnittzeichnung ein Ausschnitt aus Figur 3.d) gezeigt, in welchem mehr Details im Bereich des ringförmigen Spalts und der beiden Spannelemente erkennbar sind. Das erste Spannelement 15 ist im gezeigten Zustand geschlossen und hält ein oberes Ende 80 des neuen Linerabschnitts 108 in dichtender Weise fest. Das zweite Spannelement 101, das in der gezeigten Ausführungsform als Blähdichtung ausgebildet ist, ist nun entlastet. In den Ringkanal 41 wird ein Gas, beispielsweise Luft oder ein Inertgas, eingeströmt. Durch den geringen Luftspalt 42 gelangt das eingeströmte Gas an der entlasteten Blähdichtung vorbei in den Bereich der Aussenfläche des ersten Rohrelements, welcher direkt an den ringförmigen Spalt angrenzt, d.h. in den Bereich zwischen Ringförmigem Spalt und erster Anpressfläche, an welche das erste Spannelement den Linerabschnitt 108 anpresst. Falls sich nun durch das nach Innen ziehen des Linerrests 108' eine nicht perfekt abgedichtete Stelle entlang des Umfangs des ringförmigen Spalts ergeben sollte, strömt aufgrund des Überdrucks auf der Aussenseite Gas durch diese Stelle nach innen und verhindert ein Austreten von Prozessmaterial. Der Federdruck auf den eingeklemmten Liner kann so geringer gewählt werden, sodass eine mechanische Beschädigung des Liners weniger wahrscheinlich wird, ohne dass als Nebenwirkung ein Staubaustritt zu befürchten ist. Das Gas wird beispielsweise so lange eingeströmt, bis die Blähdichtung wieder aufgeblasen ist (wie in Figur 3.a gezeigt) und eine weitere Barriere gegen Austritt von Prozessmaterial aufgebaut ist. Der für die Erfindung wichtige Gasauslass mündet in dieser Ausführungsform in den Ringkanal 41, welcher eine Aussenfläche des ersten Rohrelements bildet. Der Gasauslass ist im gezeigten Schnitt gemäss Figur 4 nicht sichtbar. Da sich der Ringkanal um den gesamten Umfang des ersten Rohrelements herum erstreckt, mündet der Gasauslass also aus einem Bereich zwischen dem ringförmigen Spalt und der genannten Anpressfläche aus der Aussenfläche des ersten Rohrelements. Der Gasauslass steht über den Ringkanal 41 in direkter fluiddynamischer Verbindung mit dem äusseren Rand des ringförmigen Spalts.

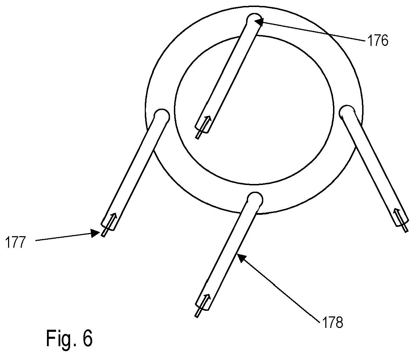

In Figur 5 ist eine beispielhafte Ausgestaltung des zweiten Spannelements 101 gezeigt, das als Blähdichtung ausgebildet ist. Ringkanal 41 ist als eine das erste Rohrelement 11 umlaufende Nut ausgebildet. In den Ringkanal wird durch wenigstens einen Zugangskanal 176, vorzugsweise 6 bis 8 Zugangskanäle, ein Gas, beispielsweise Luft oder ein Inertgas, eingeströmt (Pfeil 177). An den Zugangskanal 176 kann z.B. ein Schlauch angeschlossen werden, der das Gas zuführt (siehe Figur 6). Eine Leitlippe 175 bildet einen Luftspalt 42 zwischen dem Ringkanal 41 und der Blähdichtung. Die Anzahl und Anordnung der Zugangskanäle 176 kann so gewählt werden, dass eine möglichst homogene Druckverteilung des Gases im Ringkanal erreicht wird. Insbesondere kann durch die Anzahl und Anordnung der Zugangskanäle eine homogene Druckverteilung dann gewährleistet werden, wenn das Gas über den Luftspalt, z.B. an der Blähdichtung vorbei, ungleichmässig entweicht. Die Leitlippe kann aus Kunststoff gefertigt sein und/oder am zweiten Spannelement entfernbar befestigt sein. Die Funktion des Gases zur Verhinderung von Staubaustritt ist oben für die Figur 4 beschrieben.

Die Figur 6 zeigt eine Unteransicht des zweiten Spannelements 101 aus Figur 5. An die Zugangskanäle 176 sind in diesem Beispiel Schläuche oder Rohre 178 angebracht, über welche das Gas (Pfeil 177), beispielsweise Luft oder ein Inertgas, in die Zugangskanäle eingeströmt. Es sind vier Zugangskanäle gezeigt, wobei diese Anzahl nur beispielhaft ist und wenigstens ein Zugangskanal aber vorzugsweise 6 bis 8 Zugangskanäle angebracht sein können.

### Bezugszeichenliste

- 10: Halterungs-Anordnung
- 11: erstes Rohrelement
- 12: zweites Rohrelement
- 13: ringförmiger Spalt
- 13': äusserer Rand (des ringförmigen Spalts)
- 14: Innenraum
- 15: erstes Spannelement
- 16: erste Anpressfläche
- 17: Bereich der Aussenfläche des ersten Rohrelements (zwischen ringförmigem Spalt und erster Anpressfläche)
- 18: Gasauslass
- 19: direkte fluiddynamische Verbindung
- 20: Folienschlauch
- 20': erste Umfangslinie (des Folienschlauchs)
- 20'': zweite Umfangslinie (des Folienschlauchs)
- 21: Mittel zur Erzeugung eines Gasvolumenstroms
- 22: Prozessmaterial
- 23: Staub aus Prozessmaterial
- 24: Umgebung
- 25: Achse
- 26: um das erste Rohrelement umlaufender Raumbereich
- 27: Bewegungsrichtung des ersten Spannelements
- 28: Bewegungsrichtung des zweiten Rohrelements
- 41: Ringkanal
- 42: geringer Luftspalt
- 70: Nutzabschnitt (des Linervorrats)
- 71: Abcrimpung oder Abbindung
- 80: freies Ende (des Linerstücks)
- 80', 80'': Restende
- 81, 81': Abcrimpung oder Abbindung
- 89: Verschluss
- 100: Umfüllvorrichtung
- 101: zweites Spannelement
- 107: Linervorrat
- 108: Linerstück
- 108': Linerrest
- 108'': Liner als sackförmige Verpackung
- 113: Anschlussmittel der Leitröhre
- 116: Transfereinheit
- 118: Inertgasleitung
- 119: Waschmittelleitung
- 150: Hubgestänge
- 165: Deckel
- 166: Stopfen
- 170: Basisteil (des zweiten Rohrelements)
- 171: Federung
- 172: Pressring
- 173: Stopfelement
- 174: Dichtung
- 175: Leitlippe
- 176: Zugangskanal
- 177: Gasstrom
- 178: Schlauch oder Rohr
- A: erstes Behältnis
- B: zweites Behältnis

## Patentansprüche

1. Halterungs-Anordnung (10) zum dichtenden Haltern eines Folienschlauchs (20), wobei die Halterungs-Anordnung ein erstes Rohrelement (11) umfasst, an welches durch einen ringförmigen Spalt (13) vom ersten Rohrelement getrennt ein zweites Rohrelement (12) anschliesst,
wobei das erste und das zweite Rohrelement gemeinsam einen Innenraum (14) umgeben,
wobei ein erstes Spannelement (15) radial aussen um das erste Rohrelement herum verläuft,
wobei das erste Rohrelement, das zweite Rohrelement und das erste Spannelement derart ausgebildet sind, dass der Folienschlauch aus dem Innenraum durch den ringförmigen Spalt hindurch auf eine Aussenseite des ersten Rohrelements geführt werden kann, dass der Folienschlauch entlang einer ersten Umfangslinie (20') des Folienschlauchs durch das erste Spannelement gegen eine erste Anpressfläche des ersten Rohrelement dichtend fixiert werden kann und dass der Folienschlauch entlang einer zweiten Umfangslinie (20") des Folienschlauchs im ringförmigen Spalt dichtend fixiert werden kann,
wobei in einem Bereich (17) zwischen dem ringförmigen Spalt und der Anpressfläche ein Gasauslass (18) aus der Aussenfläche des ersten Rohrelements mündet, und wobei der Gasauslass in direkter fluiddynamischer Verbindung (19) mit einem äusseren Rand (13') des ringförmigen Spalts steht.

2. Halterungs-Anordnung (10) nach Anspruch 1, wobei der Gasauslass (18) mit einem Mittel (21) zur Erzeugung eines Gasvolumenstroms, insbesondere mit einer Druckflasche oder mit einer Pumpe, fluiddynamisch verbunden ist.

3. Halterungs-Anordnung (10) nach einem der Ansprüche 1 oder 2, wobei das zweite Rohrelement (12) gegenüber dem ersten Rohrelement (11) in einer axialen Richtung zum Öffnen und Schliessen des ringförmigen Spalts verfahrbar ist.

4. Halterungs-Anordnung (10) nach einem der Ansprüche 1 bis 3, wobei die Halterungs-Anordnung ein zweites Spannelement (101) umfasst, wobei das zweite Spannelement um das erste Rohrelement herum verläuft, und derart angeordnet ist, dass in einem aktivierten Zustand des zweiten Spannelements ein eingefalzter Abschnitt des Folienschlauchs gegen eine zweite Anpressfläche des ersten Rohrelements dichtend fixiert werden kann und dass zumindest in einem nicht-aktivierten Zustand des zweiten Spannelements die direkte fluiddynamische Verbindung (19) zwischen Gasauslass (18) und dem äusserem Rand (13') des ringförmigen Spalts offen ist.

5. Umfüllvorrichtung (100) zum Überleiten von Prozessmaterial (22), wobei die Umfüllvorrichtung die Halterungs-Anordnung (10) nach einem der Ansprüche 1 bis 4 umfasst.

6. Umfüllvorrichtung (100) nach Anspruch 5, weiter umfassend eine Transfereinheit (116), welche den Eingriff in den Innenraum ermöglicht und eine Ausschleusung von kontaminierten Resten von Abschnitten des Folienschlauchs ermöglicht.

7. Verfahren umfassend das Haltern eines einseitig kontaminierten Folienschlauchs (20, 108') im Spalt (13) einer Halterungs-Anordnung (10) nach einem der Ansprüche 1 bis 4 und während diesem Haltern ein Erzeugen eines gegenüber dem Innenraum (14) erhöhten Gasdrucks am Gasauslass (18).

8. Verfahren zum Austauschen eines in einer Halterungs-Anordnung (10) nach Anspruch 4 gehalterten, einseitig kontaminierten Folienschlauchs (108') durch einen neuen, unkontaminierten Folienschlauch (108) ist, wobei das Verfahren die Schritte umfasst:
- Abgedichtetes Fixieren eines umgefalzten, ringförmigen Bereichs des einseitig kontaminierten Folienschlauchs (108') im zweiten Spannelement (101), wobei der Folienschlauch (108') eine Sackform bildend an einem Ende mit einer Abcrimpung oder Abbindung (81') verschlossen ist;
- Einführen eines ersten Endes des unkontaminierten Folienschlauchs (108) vom Innenraum (14) her, durch den Spalt (13) hindurch ins geöffnete erste Spannelement (15) und Schliessen des ersten Spannelements zum dichtenden Fixieren des unkontaminierten Folienschlauchs (108) entlang einer ersten Umfangslinie (20') des Folienschlauchs (108) gegen eine erste Anpressfläche (16) des ersten Rohrelements (11);
- Heranfahren des zweiten Rohrelements (12) bis zu einer Klemmposition an das erste Rohrelement (11) heran, wobei zwei Lagen des kontaminierten Folienschlauchs (108') und eine Lage des unkontaminierten Folienschlauchs (108) im Spalt (13) gehaltert werden;
- Lösen des zweiten Spannelements und Herausziehen des kontaminierten Folienschlauchs (108') in Richtung Innenraum (14), während ein gegenüber dem Innenraum (14) erhöhter Gasdruck am Gasauslass (18) erzeugt wird.

9. Verfahren zum Umfüllen von Prozessmaterial umfassend die Schritte nach Anspruch 7 und/oder die Schritte nach Anspruch 8, wobei Prozessmaterial von einem ersten Behältnis durch den Innenraum (14) hindurch in ein zweites Behältnis umgefüllt wird, während der Folienschlauch (108) im Spalt (13) abgedichtet gehaltert wird.

10. Verwendung der Halterungs-Anordnung (10) nach einem der Ansprüche 1 bis 4 zum Haltern eines Folienschlauchs beim kontaminationsarmen Umfüllen von Prozessmaterial (22).
